# EUROPÄISCHE PATENTSCHRIFT

(11) **EP 3 077 717 B1**
(45) Veröffentlichungstag und Bekanntmachung des Hinweises auf die Patenterteilung: **21.02.2018**
(21) Anmeldenummer: 14795784.9
(22) Anmeldetag: 06.10.2014
(51) Int. Cl.: F16L 37/088, F16L 37/32

(54) **FLUIDKUPPLUNG**
FLUID COUPLING
RACCORD FLUIDIQUE

(30) Priorität: 03.12.2013 DE 102013113360
(43) Veröffentlichungstag der Anmeldung: 12.10.2016
(73) Patentinhaber: Oschmann Gbr, 86938 Schondorf (DE)
(72) Erfinder: DÖRNHÖFER, Anton, 85232 Bergkirchen (DE); STAUFF, Hermann, 47877 Willich (DE)
(74) Vertreter: Gustorf, Gerhard
(86) Internationale Anmeldenummer: PCT/EP2014/071313
(87) Internationale Veröffentlichungsnummer: WO 2015/082097

(56) Entgegenhaltungen:
- WO-A1-2008/153510
- WO-A1-2012/096143
- DE-U- 7 522 173
- FR-A1- 2 795 156
- FR-A3- 2 906 341
- US-A- 5 806 832
- US-A1- 2005 057 042

## Beschreibung

Die Erfindung betrifft eine Fluidkupplung mit einer Buchse und einem Stecker zum Verbinden von zwei Flüssigkeitsschläuchen nach dem Oberbegriff des Anspruchs 1.

Zum Verbinden von Leitungsschläuchen für Wasser mit einem verhältnismäßig niedrigen Druck von bis zu 10 bar sind Kupplungen bekannt, bei denen an der Buchse oder am Stecker eine dazu koaxiale Hülse vorgesehen ist, die zum Verbinden oder Lösen der beiden Kupplungshälften manuell zurückgeschoben werden muss, was den Kupplungs- bzw. Entkupplungsvorgang kompliziert gestaltet.

Eine Fluidkupplung mit den Merkmalen des Oberbegriffs des Anspruchs 1 ist bekannt aus FR 2 906 341 A3, wobei allerdings die Ringnut für den Eingriff des Verriegelungselementes durch zur Längsachse des Steckers rechtwinklige Seitenflanken begrenzt ist.

In US 2005/0057042 A1 ist eine Fluidkupplung beschrieben und dargestellt, bei der jedoch das Verriegelungselement nicht gabelförmig, sondern ringförmig ausgebildet ist und alternativ in eine Ringnut mit schrägen oder mit planparallelen Seitenflanken eingreift.

Der Erfindung liegt die Aufgabe zugrunde, eine Fluidkupplung zur Verfügung zu stellen, die eine vereinfachte Betätigung mit nur einer Hand sowohl beim Verbinden als auch beim Lösen der beiden Kupplungshälften gestattet und die mit den meisten der gängigen Kupplungssysteme kompatibel ist.

Die Lösung dieser Aufgabe ergibt sich aus den Merkmalen des Anspruchs 1. Vorteilhafte Weiterbildungen sind Gegenstand der abhängigen Ansprüche.

Ein wesentlicher Vorteil der Erfindung gegenüber dem Stand der Technik besteht darin, dass zum Verbinden der beiden Kupplungshälften diese nur ineinander geschoben werden müssen und selbst verriegeln, während für den Lösevorgang lediglich der seitliche Druckknopf mit dem Daumen eingedrückt werden muss.

Die Erfindung ist nachstehend an einem Ausführungsbeispiel erläutert, das in der Zeichnung dargestellt ist. In dieser zeigen:
- Figur 1: einen Längsschnitt durch die Kupplung im gelösten Zustand,
- Figur 2: die Kupplung im zusammengesteckten und verriegelten Zustand,
- Figur 3: im vergrößertem Maßstab eine perspektivische Darstellung der Buchse,
- Figur 4: eine Draufsicht auf die Buchse der Figur 3 ohne Druckknopf
- Figur 5: den Druckknopf außerhalb der Buchse,
- Figur 6: eine Draufsicht auf die Buchse mit dem Druckknopf in Verriegelungsstellung und
- Figur 7: die Buchse der Figur 6 mit eingeschobenem Druckknopf in seiner Lösestellung.

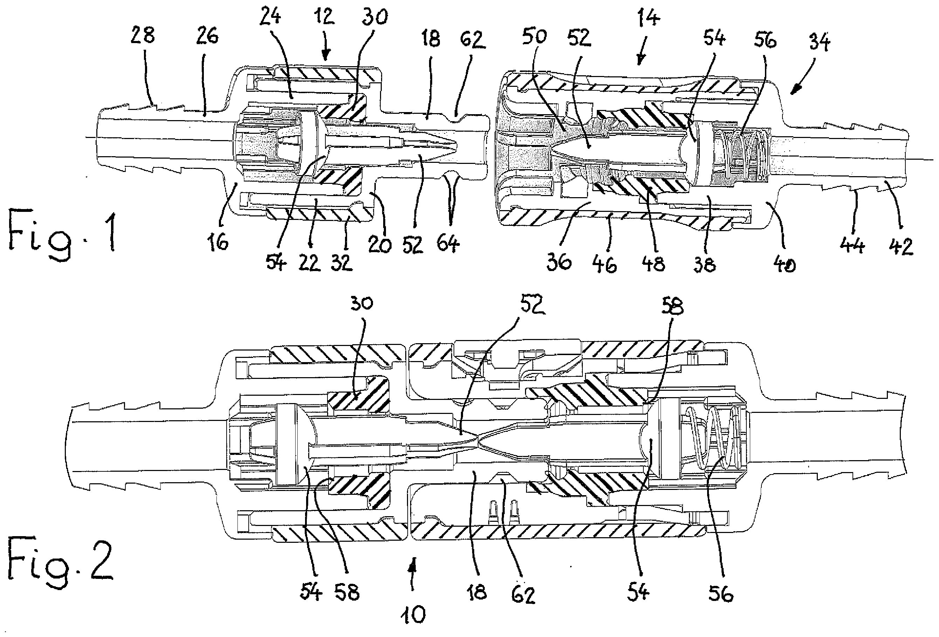

Wie die Figuren 1 und 2 zeigen, setzt sich die Kupplung 10 gemäß der Erfindung aus zwei Teilen zusammen, nämlich einem Stecker 12 und einer Buchse 14, die beide als Kunststoffteile ausgebildet sind.

Der Stecker 12 hat ein zylindrisches Gehäuse 16, von dem zentrisch ein zylindrischer Hals 18 kleineren Durchmessers absteht, der zum Eingriff in die Buchse 14 dient. Das Gehäuse 16 ist zweiteilig ausgebildet und hat einen am Hals 18 angeformten Boden 20 mit einem davon abstehenden Zylinder 22, der einen Zylinder 24 kleineren Durchmessers übergreift, von dem axial ein Anschlussstück 26 mit Tannenbaumprofil 28 absteht, auf das ein nicht gezeigter Flüssigkeitsschlauch aufgeschoben werden kann. In den Zylinder 22 ist eine stufenförmige Ringdichtung 30 eingesetzt, die durch das freie Ende des kleineren Zylinders 24 gegen den Boden 20 gedrückt wird. Auf den größeren Zylinder 22 ist eine Griffhülse 32 aufgesetzt.

Auch die Buchse 14 besteht aus mehreren Kunststoffteilen und hat ein im wesentlichen zylindrisches Gehäuse 34 mit einem vorderen Aufnahmezylinder 36 für den Hals 18 des Steckers 12 und einem in diesen eingesetzten, hinteren Zylinder 38 mit einem Boden 40, von dem ein Anschlussstück 42 mit Tannenbaumprofil 44 für einen Flüssigkeitsschlauch absteht.

Auf die Mantelfläche der Buchse 14 ist auch hier eine Griffhülse 46 aufgesetzt. Zwischen den Aufnahmezylinder 36 und den hinteren Zylinder 38 des Gehäuses 34 ist eine Ringdichtung 48 eingeklemmt.

Sowohl im Hohlraum der Buchse 14 als auch im Hohlraum 50 des Steckers 12 ist jeweils ein axial verschiebbarer Ventilschaft 52 mit daran angeformten Kalottenkopf 54 angeordnet, an dessen Innenhohlseite sich eine Druckfeder 56 abstützt; die Figuren 1 und 2 zeigen die Druckfeder 56 für die Buchse 14, während sie für den Stecker 12 nicht weiter dargestellt ist.

Im gelösten Zustand der Kupplung 10 sorgen die beiden Druckfedern 56, die sich im jeweiligen Gehäuse 16 bzw. 34 abstützen, dafür, dass der Kalottenkopf 54 des Ventilschaftes 52 gegen die entsprechende Ringdichtung 30 bzw. 48 gedrückt wird, so dass im Stecker 12 und in der Buchse 14 vorhandenes Wasser nicht über das jeweilige Anschlussstück 26 bzw. 42 abfließen kann.

Wenn gemäß Figur 2 die Kupplung 10 durch Einstecken des Halses 18 des Steckers 12 in die Buchse 14 geschlossen wird, kommen die einander gegenüberliegenden Enden der beiden Ventilschäfte 52 in gegenseitige Anlage und verschieben sich axial gegen die Kraft der beiden Druckfedern 56. Das hat zur Folge, dass die beiden Kalottenköpfe 54 von ihren Dichtflächen 58 an der jeweiligen Ringdichtung 30 bzw. 48 abgehoben werden, so dass die zugeführte Flüssigkeit über das Anschlussstück 26 bzw. 42 abfließen kann.

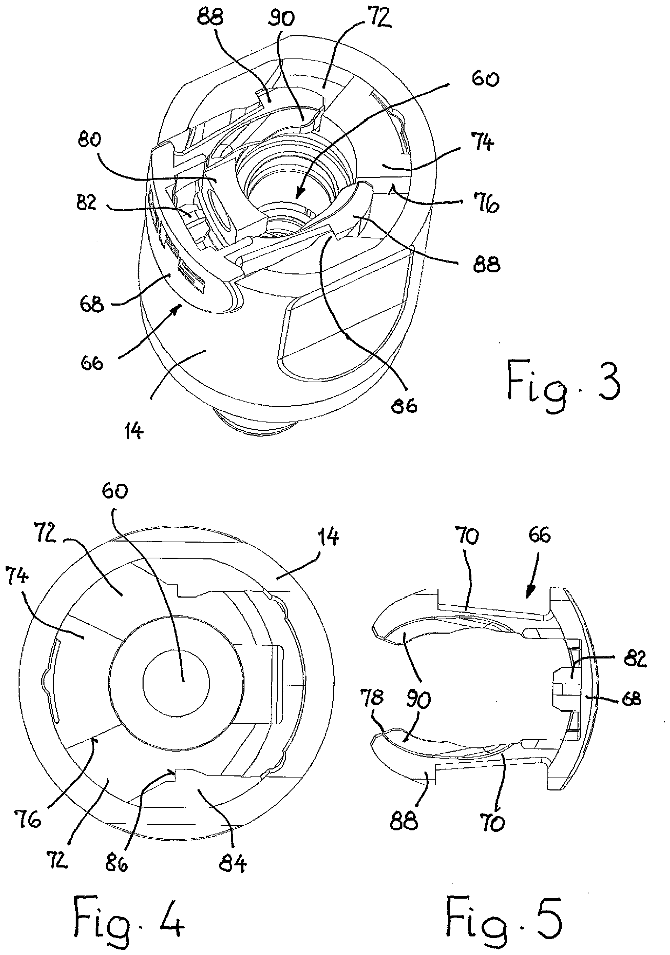

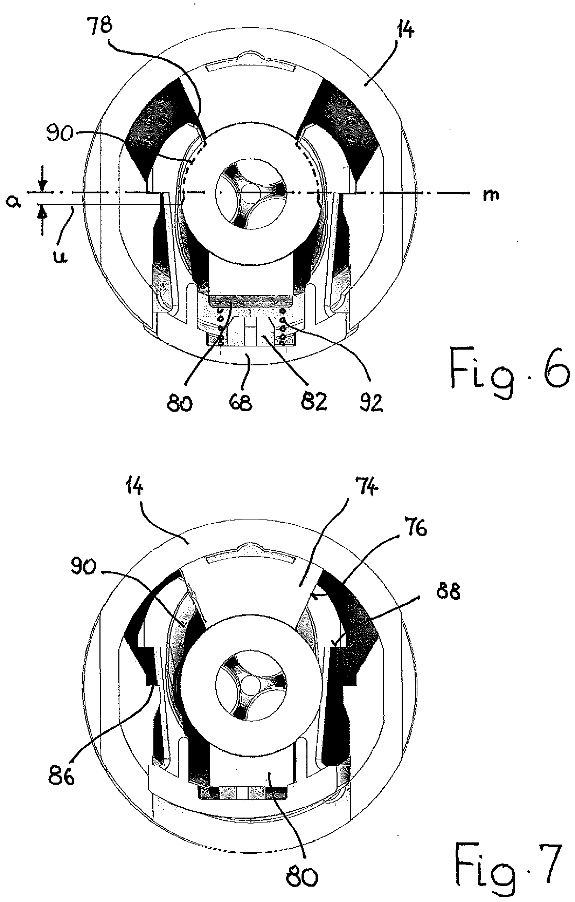

Anhand der Figuren 3 bis 7 werden nachstehend der Aufbau und die Funktionsweise des Systems zum Verriegeln von Stecker 12 und Buchse 14 gemäß der Erfindung erläutert. In der Mitte der Buchse 14 ist eine durchgehende Bohrung 60 eingearbeitet, in die zum Verbinden der Flüssigkeitsschläuche der Hals 18 des Steckers 12 eingeschoben wird. An der Außenseite des Halses 18 befindet sich eine Ringnut 62 (vgl. auch Figuren 1 und 2), die durch zwei einander gegenüberliegende, divergierende Schrägflächen 64 begrenzt ist, die um 45° zur Radialebene geneigt sind. Zur Verriegelung des Halses 18 in der Bohrung 60 der Buchse 14 dient ein in Figur 5 gezeigtes Verriegelungselement 66, das aus Kunststoff hergestellt ist und einen Druckknopf 68 hat, von dem zwei flexible Gabelarme 70 abstehen. Die Gabelarme 70 greifen in einen mehrteiligen Sitz 72 der Buchse 14 ein (vgl. Figur 3), der an der freien Stirnseite der Buchse 14 ausgebildet ist und in den Figuren 6 und 7 schwarz dargestellt ist. Auf der dem Druckknopf 68 gegenüberliegenden Seite der Buchse 14 steht axial ein Anschlagvorsprung 74 ab, an dessen beiden Seiten eine schräge Spreizfläche 76 ausgebildet ist. An diesem kommen die freien Enden 78 der beiden Gabelarme 70 bei in den Sitz 72 eingelegtem Verriegelungselement 66 zur Anlage. Wenn der Druckknopf 68 eingedrückt wird, um den Stecker 12 von der Buchse 14 zu lösen, gleiten die freien Enden 78 der Gabelarme 70 an den beiden Spreizflächen 76 entlang und drücken dabei die Gabelarme 70 auseinander. Damit ist es möglich, die Gabelarme 70 ausser Eingriff mit der Ringnut 62 des Halses 14 zu bringen, so dass dieser sich durch den Druck der beiden Druckfedern 56 selbstständig löst und aus der Bohrung 60 herausgezogen werden kann.

Wenn anschließend der Druckknopf 68 wieder freigegeben werden wird, sorgt eine zwischen diesen und einen dem Anschlagvorsprung 74 gegenüberliegenden Anschlag 80 eingesetzte Rückdruckfeder 92 dafür, dass das Verriegelungselement 66 mit seinen beiden Gabelarmen 70 wieder in die nicht eingedrückte Ausgangsstellung zurückgeschoben wird. Die erwähnte Rückdruckfeder 92 ist auf einen von dem Druckknopf 68 abstehenden Zapfen 82 aufgesetzt. Um zu verhindern, dass die Rückdruckfeder 92 den Druckknopf 68 aus seinem Sitz 72 und damit aus der Buchse 14 herausdrückt, sind in dem Sitz 72 zwei einander diametral gegenüberliegende, axiale Vorsprünge 84 ausgebildet (vgl. Figuren 4 sowie 6 und 7), die zwei diametral gegenüberliegende, radiale Endanschlagflächen 86 haben, welche eine Raststufe bilden und an denen sich die als Widerhaken 88 ausgebildeten Enden der beiden Gabelarme 70 bei nicht eindrücktem Druckknopf 68, d.h. im Verriegelungszustand abstützen.

Insbesondere aus Figuren 5 und 6 geht hervor, dass die Gabelarme 70 an ihren beiden gegenüberliegenden Innenseiten schräge Auflaufflächen 90 haben, die den Hals 18 des Steckers 12 im Bereich seiner Ringnut 62 auf einem Teil des Umfangs umgreifen. Die schrägen Aufflaufflächen 90 sind so ausgebildet, dass sie in axialer Richtung zum Stecker 12 hin muldenförmig divergieren. Auf diese Weise wird für den einzuschiebenden Hals 18 des Steckers 12 eine rampenartige Führungsfläche gebildet, die ein Einschieben des Halses 18 erleichtert und eine Spreizung der beiden Gabelarme 70 begünstigt.

Wenn der Hals 18 gemäß Figur 2 bis zum Endanschlag eingeschoben ist, wobei sich die einander gegenüberliegenden Stirnflächen von Stecker 12 und Buchse 14 berühren, wird das Verriegelungselement 66 durch die Rückdruckfeder 92 radial in seine Ausgangsposition (Figur 6) ausgeschoben, so dass die beiden Gabelarme 70 in die Ringnut 62 des Halses 18 gleiten. Ohne Betätigung des Druckknopfes 68 können die beiden Kupplungselemente 12 und 14 nicht gelöst werden.

In Figur 6 ist angedeutet, dass die an dem freien Enden 78 der Gabelarme 70 ausgebildeten Auflaufflächen 90, die in die Ringnut 62 des Halses 18 eingreifen, im Verriegelungszustand mindestens bis zur Mittelebene m des Halses 18 reichen oder über diesen mit einem geringen Übermaß u von beispielsweise 1 mm hinausstehen. Dadurch wird erreicht, dass sich bei einem Zug auf dem Stecker 12 die Kupplung 10 nicht selbsttätig lösen kann.

## Patentansprüche

1. Fluidkupplung mit einer Buchse (14) und einem Stecker (12) zum Verbinden von zwei Flüssigkeitsschläuchen, wobei der Stecker (12) einen in die Buchse (14) einschiebbaren Hals (18) mit einer Ringnut (62) für den Eingriff eines Verriegelungselementes (66) hat, das aus einem von der Außenseite der Buchse (14) radial betätigbaren Druckknopf (68) besteht, von dem zwei flexible Gabelarme (70) abstehen, die in einen Sitz (72) der Buchse (14) eingreifen und an ihren beiden gegenüberliegenden Innenseiten schräge Auflaufflächen (90) haben, die den Hals (18) im Bereich der Ringnut (62) auf einem Teil ihres Umfangs umgreifen, wobei die freien Enden (78) der beiden Gabelarme (70) an je einer schrägen Spreizfläche (76) des Sitzes (72) anliegen, **dadurch gekennzeichnet, dass** die Ringnut (62) durch zwei einander gegenüberliegende, divergierende Schrägflächen (64) begrenzt ist, wobei die freien Enden (78) der beiden Gabelarme (70) an ihrer Außenseite Widerhaken (88) haben, die im Verriegelungszustand bei nicht eingedrücktem Druckknopf (68) an einer Raststufe des Sitzes zum Anschlag kommen, die durch zwei einander gegenüberliegende Endanschlagflächen (86) ausgebildet ist, an denen sich die Widerhaken (88) der Gabelarme (70) im Verriegelungszustand abstützen.

2. Fluidkupplung nach Anspruch 1, **dadurch gekennzeichnet, dass** die an den freien Enden (78) der beiden Gabelarme (70) ausgebildeten und in die Ringnut (62) eingreifenden Auflaufflächen (90) in axialer Richtung zum Stecker (12) hin divergieren und im Verriegelungszustand bis zur Mittelebene (m) des Halses (18) reichen oder über diese mit geringem Übermaß (u) hinausstehen.

3. Fluidkupplung nach Anspruch 1 oder 2, **dadurch gekennzeichnet, dass** sich an der Innenseite des Druckknopfs (68) eine Rückdruckfeder (92) abstützt, die im Verriegelungszustand die Widerhaken (88) der beiden Gabelarme (70) gegen ihre Raststufe drückt.

4. Fluidkupplung nach einem der vorhergehenden Ansprüche, **dadurch gekennzeichnet, dass** sowohl in einem Hohlraum (50) des Steckers (12) als auch der Buchse (14) ein gegen eine Druckfeder (56) axial verschiebbarer Ventilschaft (52) mit daran angeformten Kalottenkopf (54) gelagert ist, an dessen Innenhohlseite sich die Druckfeder (56) abstützt, die im gelösten Zustand zwischen Buchse (14) und Stecker (12) die sphärische Außenseite als Kalottenkopfes (54) gegen eine Ringdichtung (30, 48) im Stecker (12) und in der Buchse (14) drückt.

5. Fluidkupplung nach Anspruch 4, **dadurch gekennzeichnet, dass** sich im miteinander verbundenen Zustand von Stecker (12) und Buchse (14) die einander gegenüberliegenden Enden der beiden Ventilschäfte (52) unter gegenseitiger Axialverschiebung berühren.

## Claims

1. Fluid coupling with a socket (14) and a plug (12) for connecting two fluid hoses, wherein the plug (12) has a neck (18) to be inserted into the socket (14), said neck (18) comprising an annular groove (62) for engaging a locking element (66), comprising a push-button (68), which may be radially actuated from the exterior of the socket (14) and from which protrude two flexible fork arms (70), which engage into a seat (72) of the socket (14) and have diverging ramp surfaces (90) on the their two opposing inner faces, which engage the neck (18) in the area of the annular groove (62) around a part of its circumference, wherein the free ends (78) of the two fork arms (70) are each abutting a diverging spreader surface (76) of said seat (72), **characterized in that** said annular groove (62) is delimited by two opposing and diverging surfaces (64) wherein the free ends (78) of said two fork arms (70) comprise barbs (88) on their exterior, which, in the locked state and with the push-button (68) not having been actuated, come into contact with a latching step of said seat (72) wherein said latching step is made up of two opposing end abutment surfaces (86) on which the barbs (88) of the fork arms (70) are propped in the locked state.

2. Fluid coupling according to claim 1, **characterized in that** the two ramp surfaces (90) constructed on the free ends (78) of the two fork arms (70) and engaging into the annular groove (62) in the locked state reach up to the mid-plane (m) of the neck (18) or exceed same by a small excess (u).

3. Fluid coupling according to claim 1 or 2, **characterized in that** a return spring (92) is propped against the inner surface of the push-button (68), which return spring (92), in the locked state, pushes the barbs (88) of the two fork arms (70) against their latching step.

4. Fluid coupling according to one of the preceding claims, **characterized in that** both in a cavity (50) of the plug (12), as well as of the socket (14), a valve stem (52) is mounted that may be displaced axially and that comprises a spherical head (54) against the concavity of which is propped a compressed spring (56), which, in the disengaged state of socket (14) and plug (12), pushes the spherical exterior of said head (54) against an annular seal (30, 48) in the plug (12) and in the socket (14).

5. Fluid coupling according to claim 4, **characterized in that** in the engaged state of plug (12) and socket (14) the opposing ends of the two valve stems (52) are in contact with each other, whereby axial displacement occurs.

## Revendications

1. Raccord hydraulique avec une douille (14) et une fiche (12) pour la jonction de tuyaux pour liquides, la fiche (12) comprenant un col (18) apte à être introduit dans la douille (14) et muni d'une rainure (62) pour l'engrènement d'un élément d'accrochage (66) consistant en un bouton de pression (68) apte à être commandé radialement par l'extérieur de la douille (14), et présentant deux bras flexibles de fourche (70) en saillie dudit bouton de pression (68), les deux bras de fourche (70) étant en engrenage dans un logement (72) de la douille (14) et présentant sur ses deux faces opposées intérieures des rampes inclinées (90) entourant ledit col (18) sur une partie de la circonférence de la rainure (62), les extrémités libres (78) des deux bras de fourche (70) s'appuyant sur deux surfaces inclinées d'écartement à expansion (76) dudit logement, **caractérisé par le fait que** la rainure (62) est délimitée par deux surfaces inclinées opposées, lesdites extrémités libres (78) des deux bras de fourche (70) ayant sur ses faces extérieures des barbes (88) s'appuyant en état de verrouillage sur un gradin d'arrêt dudit logement lorsque le bouton de pression (68) n'a pas été pressé, ledit gradin d'arrêt étant formé par deux surfaces opposées d'arrêt de fin de course (86) sur lesquelles s'appuient les barbes (88) des bras de fourche (70).

2. Raccord hydraulique selon la revendication 1, **caractérisé par le fait que** lesdites rampes inclinées (90) formées sur les extrémités libres (72) des bras de fourche (70) et s'engageant dans la rainure (62) divergent en sens axial vers la fiche (12) et s'étendent, en état de verrouillage, jusqu'au plan médian (m) du col (18) ou le dépassent d'un faible surdimensionnement (u).

3. Raccord hydraulique selon la revendication 1 ou 2, **caractérisé par le fait qu'**un ressort de pression en retour (92) s'appuie sur la surface intérieure dudit bouton de pression (68), ledit ressort (92) étant apte à pousser, en état de verrouillage, les barbes (88) des deux bras de fourche (70) contre leur gradin d'arrêt.

4. Raccord hydraulique selon une des revendications précédentes, **caractérisé par le fait que** dans une cavité (50) aussi bien de la fiche (12) que de la douille (14) est logée une tige de soupape (52) axialement mobile contre un ressort à pression (56), ladite tige (52) présentant une tête convexe (54) avec une surface intérieure cave contre laquelle s'appuie ledit ressort à pression (56) qui pousse, en état desserré de la douille (14) et de la fiche (12), la surface extérieure sphérique de la tête convexe (54) contre une garniture annulaire d'étanchéité (30, 48) montée dans la fiche (12) et la douille (14).

5. Raccord hydraulique selon la revendication 4, **caractérisé par le fait qu'**en état relié de la fiche (12) et de la douille (14) les deux extrémités opposées des deux tiges (52) viennent en contact par mouvement axial commun.
